# EUROPÄISCHE PATENTSCHRIFT

(11) **EP 1 308 335 B1**
(45) Veröffentlichungstag und Bekanntmachung des Hinweises auf die Patenterteilung: **03.11.2004**
(21) Anmeldenummer: 02024627.8
(22) Anmeldetag: 04.11.2002
(51) Int. Cl.: B60K 1/04, B60R 16/04

(54) **Halteeinrichtung für eine Batterie eines Kraftfahrzeuges**
Holding device for a vehicle battery
Dispositif de retenue pour une batterie d'un véhicule

(30) Priorität: 06.11.2001 DE 10154389
(43) Veröffentlichungstag der Anmeldung: 07.05.2003
(73) Patentinhaber: ADAM OPEL AG, 65423 Rüsselsheim (DE); Arkal Plastic Products, 15135 Israel (IL)
(72) Erfinder: Zielke, Stefan, Dipl.-Ing., 65812 Bad Soden (DE); Nütz, Martin, Dipl.-Ing., 65817 Eppstein (DE); Ben-Horin, Amitai, 15135 Kibbutz (IL)

(56) Entgegenhaltungen:
- DE-A- 2 037 568
- GB-A- 612 493
- PATENT ABSTRACTS OF JAPAN vol. 1996, no. 01, 31. Januar 1996 (1996-01-31) -& JP 07 246844 A (NISSAN MOTOR CO LTD), 26. September 1995 (1995-09-26)

## Beschreibung

Die Erfindung betrifft eine Halteeinrichtung für eine Batterie eines Kraftfahrzeuges, die auf einer Trägerplatte aufsetzbar ist.

Es sind eine Vielzahl von Halte- bzw. Befestigungseinrichtungen für Batterien von Kraftfahrzeugen bekannt, um diese vorzugsweise im Motorraum des Kraftfahrzeuges gegen Verrutschen oder gar Loslösen, insbesondere während des Betriebes des Kraftfahrzeuges, zu sichern.

Häufig werden eine oder mehrere Schellen verwendet, die mittels Schrauben an einer Basis im Motorraum, z. B. einem Tragegestell, verschraubt werden, wobei die Schellen eine im Bodenbereich der Batterie ausgebildete Vorsprungskante angreifen.

Weiterhin ist aus der DE 31 50 652 A1 eine Schnellwechselvorrichtung für die Batterien eines elektrisch betriebenen Kraftfahrzeuges bekannt, wonach im Stauraum fahrzeugseitig ortsfeste Anschlusskontakte für die Batterien vorgesehen sind, die so formschlüssig in entsprechende batterieseitige Anschlusskontakte eingreifen, dass sie gleichzeitig elektrische Verbindung, Positionierung und Halterung der Fahrzeugbatterien bewirken.

Des Weiteren ist aus der DE 41 10 552 A1 eine Vorrichtung zum Aufnehmen und Halten einer Starterbatterie in einem Kraftfahrzeug bekannt, bei der an einer Konsole ausgebildete Federzungen in entsprechende Ausnehmungen des Batteriegehäuses eingreifen.

Diese bekannten Lösungen sind für eine industrielle Montage des Kraftfahrzeuges am Montageband weit gehend ungeeignet, da sie eine Vielzahl von Montageschritten erforderlich machen, die durch Fehler behaftet sind, die sich z. B. durch die Notwendigkeit der exakten Lagepositionierung der Befestigungselemente für die Batterie mit der Batterieträgereinheit ergeben. Darüber hinaus sind manche Montagelösungen zum Festlegen der Kraftfahrzeugbatterie konstruktiv und montagetechnisch sehr aufwändig.

Ferner werden bei der industriellen Montage von Kraftfahrzeugen der Batterieträger und die Halteklammer für die Batterie separat angeliefert und müssen werksseitig nach dem Laden der Batterie verschraubt werden. Dabei kommt es häufig vor, dass das Befestigungsloch für die Verschraubung in der Trägerplatte der Batterie nicht sofort gefunden wird. Dies führt in der Regel zu einer Verzögerung des Montageprozesses, zumindest bei diesem Montageschritt.

Der Erfindung liegt die Aufgabe zugrunde, eine Halteeinrichtung der eingangs genannten Art zu schaffen, um die Befestigung der Batterie während der Montage des Kraftfahrzeuges und zum Zwecke der späteren Wartung der Batterie zu erleichtern und dadurch Montageaufwand und - kosten einzusparen.

Diese Aufgabe wird bei einer gattungsgemäβen Walteeinrichtung erfindungsgemäß gelöst durch
- ein an der Unterseite mit der Trägerplatte mit dieser in Rasteingriff bringbares und um seine Längsachse schwenkbares Scharnier mit einer mittigen Gewindebohrung, und
- eine eine mittige Bohrung aufweisende Halteklammer, die mittels einer Feststellschraube auf dem Scharnier befestigbar ist,
wobei die Unterseite der Halteklammer eine Rastkulisse zum Eingriff in Rastflächen in der Trägerplatte aufweist, und das Scharnier gemeinsam mit der Halteklammer in eine Batteriehalteposition bringbar ist.

Die Montage der Batterie an der Trägerplatte wird hierdurch erheblich sicherer, d. h. fehlerfreier und einfacher, da die Handhabung der Halteeinrichtung und die Verschraubung der Halteklammer für die Batterie verbessert und erleichtert werden.

Das Scharnier und die Halteklammer werden bereits vormontiert auf der Trägerplatte am Montageband für das Kraftfahrzeug angeliefert, wobei diese Teile bereits mittels der Feststellschraube vorverschraubt sind. Dabei ist die Feststellschraube noch nicht fest gezogen, so dass sich die Halteklammer in der zurück geklappten Position befindet. Die Batterie wird ohne weitere Operationen auf die Trägerplatte aufgesetzt. Anschließend wird die Halteklammer mit einem einfachen Handgriff in die Batteriehalteposition geklappt und die Feststellschraube angezogen, so dass die Batterie auf der Trägerplatte festgelegt ist.

Eine separate Montage der Halteklammer am Montageband des Kraftfahrzeuges entfällt hierbei. Weiterhin werden keine zusätzlichen Lagerflächen am Lager oder am Montageband für die Montageteile benötigt. Ferner entfällt ein aufwändiges Suchen des Schraubenloches, da die Halteklammer bereits vorpositioniert ist und nur durch einfaches Umlegen und Festschrauben gesichert wird.

Die Unteransprüche haben vorteilhafte Weiterbildungen der Erfindung zum Gegenstand.

Sonach weist das Scharnier an seinen Stirnseiten jeweils einen Lagerzapfen zum Rasteingriff in mit jeweils einer dazu korrespondierenden, in der Trägerplatte ausgebildeten Ausnehmung auf. Dadurch wird einerseits eine Halterung des Scharniers und andererseits eine Schwenkbeweglichkeit des Scharniers um dessen Längsachse an der Unterseite der Trägerplatte gewährleistet.

Weiterhin weist die Trägerplatte einen Durchbruch zur Gewindebohrung des Scharniers zur Durchführung der Feststellschraube auf, so dass das Scharnier durch die Feststellschraube mit der Halteklammer verbunden werden kann.

Nach einer weiteren Ausbildung der erfindungsgemäßen Halteeinrichtung weist die Rastkulisse der Halteklammer an einer Längsseite mehrere zur Trägerplatte gerichtete Rastnasen auf, die in dazu korrespondierenden Rastflächen in der Oberseite der Trägerplatte gleiten. Die Rastnasen und die entsprechenden Rastflächen in der Trägerplatte ermöglichen ein Klappen des Scharniers um dessen Längsachse, wobei die damit verschraubte Halteklammer gleichzeitig mitverschwenkt wird, um die Batterie zu Klemmen bzw. deren Klemmung zu lösen.

Hierzu wird die Halteklammer mittels der Feststellschraube mit dem an der Trägerplatte schwenkbeweglich angeordneten Scharnier verbunden. Nach dem Aufsetzen der Batterie auf die Trägerplatte wird die Feststellschraube angezogen und gleichzeitig die Halteklammer mit dem Scharnier in eine die Batterie haltende Position geklappt, so dass die Batterie lagesicher festgelegt ist.

Die Halterung der Batterie an der Trägerplatte erfolgt hierbei vorzugsweise dadurch, dass an der der Rastkulisse gegenüberliegenden Längsseite der Halteklammer an Haltesteg ausgebildet ist, der in der Batteriehalteposition in eine Aussparung oder in einen Vorsprung des Batteriegehäuses eingreift.

Der der Erfindung zu Grunde liegende Gedanke wird in der nachfolgenden Beschreibung anhand eines Ausführungsbeispieles, das in den Zeichnungen dargestellt ist, näher beschrieben. Es zeigen:
- Fig. 1: eine perspektivische Ansicht der erfindungsgemäßen Halteeinrichtung ohne Kraftfahrzeugbatterie,
- Fig. 2: eine perspektivische Unteransicht des Scharniers für die Halteeinrichtung nach Fig. 1,
- Fig. 3: eine perspektivische Draufsicht des Scharniers nach Fig. 2,
- Fig. 4: eine perspektivische Unteransicht der Halteklammer für die Halteeinrichtung nach Fig. 1,
- Fig. 5: eine Seitenansicht der Halteklammer nach Fig. 4,
- Fig. 6: eine perspektivische Draufsicht der Halteklammer nach Fig. 4,
- Fig. 7: eine Unteransicht der Trägerplatte für die Batterie mit dem Scharnier,
- Fig. 8: eine vergrößerte Teildraufsicht der Trägerplatte mit dem Scharnier ohne Halteklammer,
- Fig. 9: eine vergrößerte Teilseitenansicht der Rastkulisse der Halteklammer und der Trägerplatte und
- Fig. 10: eine vergrößerte Teilseitenansicht der Halteeinrichtung im montierten Zustand mit Batterie.

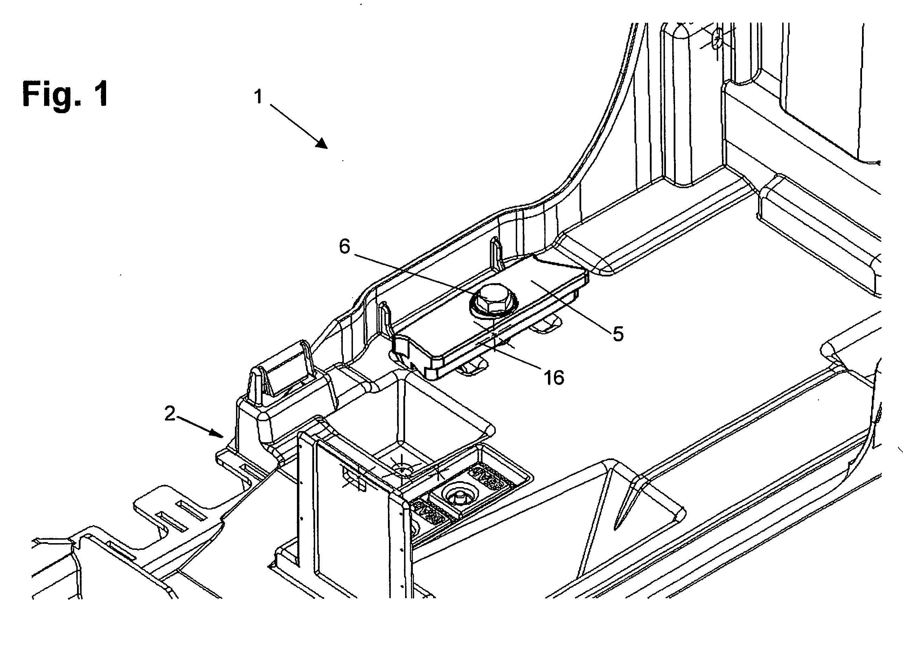

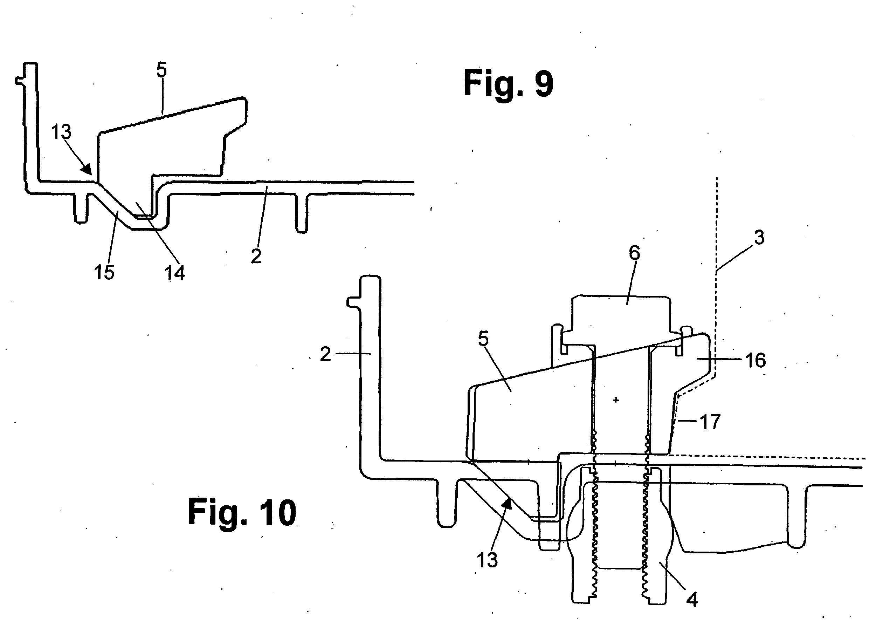

Die Halteeinrichtung 1 wird gemäß den Fig. 1 und 10 auf einer Trägerplatte 2 für eine Batterie 3 eines Kraftfahrzeuges befestigt.

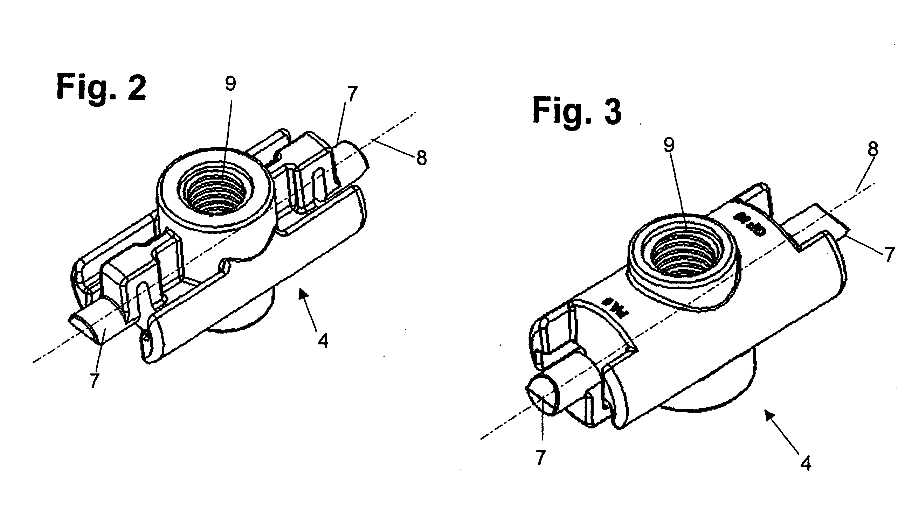

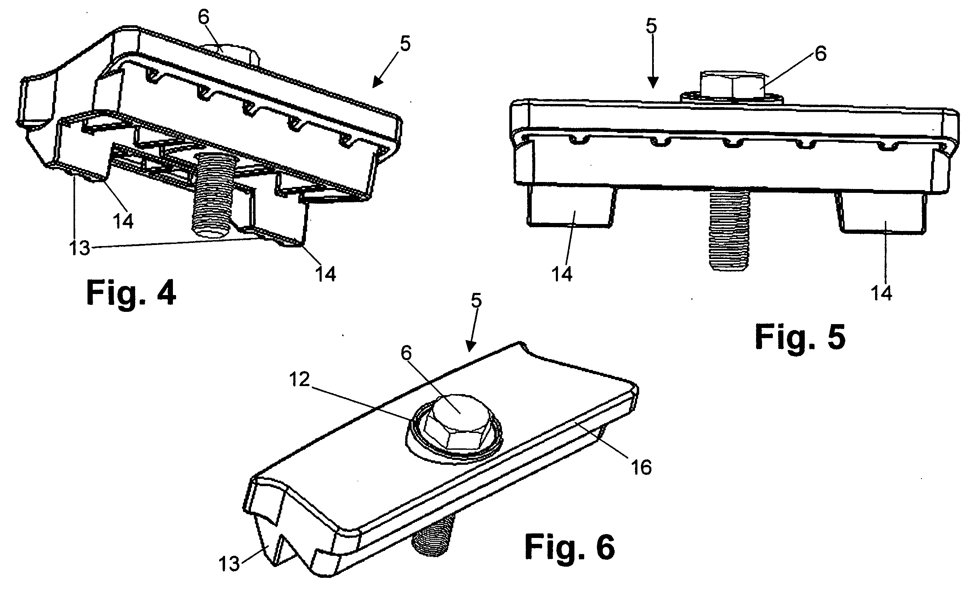

Zur Halteeinrichtung 1 gehören ein Scharnier 4 gemäß den Fig. 2 und 3 sowie eine Halteklammer 5 mit einer Feststellschraube 6 gemäß den Fig. 4 bis 6, deren Zusammenwirken in Fig. 10 dargestellt ist.

Das Scharnier 4 gemäß den Fig. 2 und 3 weist an seinen Stirnseiten jeweils einen Lagerzapfen 7 auf, wobei die Lagerzapfen 7 mit der Längsachse 8 des Scharniers 4 fluchten. In der Mitte des Scharniers 4 ist eine Gewindebohrung 9 zur Aufnahme der Feststellschraube 6 ausgebildet.

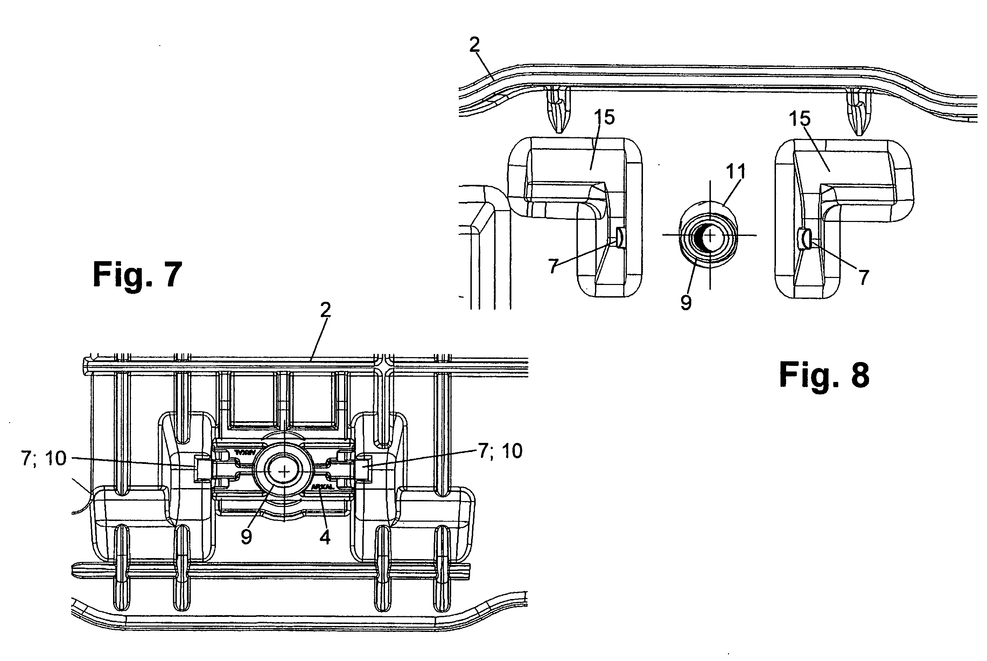

Das Scharnier 4 ist gemäß Fig. 7 mit seinen Lagerzapfen 7 in dazu korrespondierenden Ausnehmungen 10 an der Unterseite der Trägerplatte 2 gelagert. Dabei befinden sich die Lagerzapfen 7 des Scharniers 4 in Rasteingriff mit den Ausnehmungen 10 der Trägerplatte 2, so dass das Scharnier 4 um seine Längsachse 8 in der Trägerplatte 2 verschwenkbar ist. Darüber hinaus ist in der Trägerplatte 2 gemäß Fig. 8 ein Durchbruch 11 zur Gewindebohrung 9 des Scharniers 4 zur Durchführung der Feststellschraube 6 von der Halteklammer 5 vorgesehen. Somit lagert das Scharnier 4 unterhalb der Trägerplatte 2, wie dies in Fig. 10 dargestellt ist.

Die Halteklammer 5 gemäß den Fig. 4 bis 6 besitzt eine mittige Bohrung 12 zur Aufnahme der Feststellschraube 6. Des Weiteren ist an einer Längsseite der Halteklammer 5 eine Rastkulisse 13 ausgebildet, die aus zwei zueinander beabstandeten Rastnasen 14 besteht. Diese Rastnasen 14 besitzen eine im wesentlichen Keilform. Im montierten Zustand der Halteklammer 5 liegen die Rastnasen 14 gemäß Fig. 9 in dazu korrespondierenden Rastflächen 15 in der Oberseite der Trägerplatte 2.

Nachdem das Scharnier 4 mit seinen Lagerzapfen 7 in die Ausnehmungen 10 an der Unterseite der Trägerplatte 2 eingesteckt wurde, wird die mit der Feststellschraube 6 versehene Halteklammer 5 oberseitig auf die Trägerplatte 2 aufgesetzt, so dass die Rastnasen 14 der Halteklammer 5 mit den entsprechenden Rastflächen 15 an der Oberseite der Trägerplatte 2 in Eingriff gelangen und an diesen gleiten können. Die Feststellschraube 6 wird in die Gewindebohrung 9 des Scharniers 4 eingedreht.

Danach wird die Batterie 3 auf die Trägerplatte 2 gemäß Fig. 10 aufgesetzt. An der der Rastkulisse gegenüberliegenden Längsseite der Halteklammer 5 ist ein Haltesteg 16 ausgebildet. Dieser gelangt in Eingriff mit einem im Bodenbereich der Batterie 3 ausgeformten Vorsprung 17.

Wird nun die Feststellschraube 6 angezogen und somit die Halteklammer 5 fest mit dem Scharnier 4 verbunden, klappt die Halteklammer 5 automatisch in den in Fig. 10 gezeigten Zustand, wobei die Rastnasen 14 der Halteklammer 5 in den Rastflächen 15 der Trägerplatte 2 gleiten, so dass der Haltesteg 16 den Vorsprung 17 der Batterie 2 hintergreift. Durch einfaches Lösen der Feststellschraube 6 kann die Halteklammer 5 wieder zurück geklappt werden, so dass die Batterie 3 freigegeben wird.

### Bezugszeichenliste

- Halteeinrichtung: 1
- Trägerplatte: 2
- Batterie: 3
- Scharnier: 4
- Halteklammer: 5
- Feststellschraube: 6
- Lagerzapfen: 7
- Längsachse: 8
- Gewindebohrung: 9
- Ausnehmung: 10
- Durchbruch: 11
- Bohrung: 12
- Rastkulisse: 13
- Rastnase: 14
- Rastfläche: 15
- Haltesteg: 16
- Vorsprung: 17

## Patentansprüche

1. Halteeinrichtung für eine Batterie (3) eines Kraftfahrzeuges, die auf einer Trägerplatte (2) aufsetzbar ist, **gekennzeichnet durch**
- ein an der Unterseite mit der Trägerplatte (2) mit dieser in Rasteingriff bringbares und um seine Längsachse (8) schwenkbares Scharnier (4) mit einer mittigen Gewindebohrung (9) und
- eine eine mittige Bohrung (12) aufweisende Halteklammer (5), die mittels einer Feststellschraube (6) auf dem Scharnier (4) befestigbar ist,
wobei die Unterseite der Halteklammer (5) eine Rastkulisse (13) zum Eingriff in Rastflächen (15) in der Trägerplatte (2) aufweist, und das Scharnier (4) gemeinsam mit der Halteklammer (5) in eine Batteriehalteposition bringbar ist.

2. Halteeinrichtung nach Anspruch 1, **dadurch gekennzeichnet, dass** das Scharnier (4) an seinen Stirnseiten jeweils einen Lagerzapfen (7) zum Rasteingriff in mit jeweils einer dazu korrespondierenden, in der Trägerplatte (2) ausgebildeten Ausnehmung (10) aufweist.

3. Halteeinrichtung nach Anspruch 1 und 2, **dadurch gekennzeichnet, dass** die Trägerplatte (2) einen Durchbruch (11) zur Gewindebohrung (9) des Scharniers (4) zur Durchführung der Feststellschraube (6) aufweist.

4. Halteeinrichtung nach den Ansprüchen 1 bis 3, **dadurch gekennzeichnet, dass** die Rastkulisse (13) der Halteklammer (5) an einer Längsseite mehrere zur Trägerplatte (2) gerichtete Rastnasen (14) aufweist, die in die dazu korrespondierenden Rastflächen (15) in der Oberseite der Trägerplatte (2) gleiten.

5. Halteeinrichtung nach den Ansprüchen 1 bis 4, **dadurch gekennzeichnet, dass** die Halteklammer (5) mittels der Feststellschraube (6) mit dem an der Trägerplatte (2) schwenkbeweglich angeordneten Scharnier (4) verbindbar ist und durch Feststellen der Feststellschraube (6) in eine die Batterie (3) haltende Position klappbar ist.

6. Halteeinrichtung nach den Ansprüchen 1 bis 5, **dadurch gekennzeichnet, dass** an der der Rastkulisse (13) gegenüberliegenden Längsseite der Halteklammer (5) an Haltesteg (16) ausgebildet ist, der in der Batteriehalteposition in eine Aussparung oder in einen Vorsprung (17) des Batteriegehäuses eingreift.

## Claims

1. Holding device for a battery (13) of a motor vehicle which can be mounted on a carrier plate (12), **characterised by**
- a hinge (4) which can be brought into latching engagement with the carrier plate (2) on the lower side thereof and pivoted about its longitudinal axis (8), with a central threaded bore (9), and
- a holding clip (5) which has a central bore (12) and which can be attached to the hinge (4) by means of a locking screw (6),
wherein the lower side of the holding clip (5) has a latch link (13) for engagement in latch surfaces (15) in the carrier plate (2), and the hinge (4) together with the holding clip (5) can be brought into a battery-holding position.

2. Holding device according to claim 1, **characterised in that** the hinge (4) has at each of its end faces a journal (7) for latching engagement with in each case a recess (10) corresponding thereto and formed in the carrier plate (2).

3. Holding device according to claim 1 or 2, **characterised in that** the carrier plate (2) has an aperture (11) to the threaded bore (9) of the hinge (4) for passage of the locking screw (6).

4. Holding device according to claims 1 to 3, **characterised in that** the latch link (13) of the holding clip (5) has on one longitudinal side several latch lugs (14) which are oriented to the carrier plate (2) and which slide in latch surfaces (15) corresponding thereto in the upper side of the carrier plate (2).

5. Holding device according to claims 1 to 4, **characterised in that** the holding clip (5) can be connected by means of the locking screw (6) to the hinge (4) arranged pivotably on the carrier plate (2), and folded into a position holding the battery (3) by locking the locking screw (6).

6. Holding device according to claims 1 to 5, **characterised in that** on the longitudinal side of the holding clip (5) opposite the latch link (13) is formed a holding web (16) which in the battery-holding position engages in a clearance or in a projection (17) of the battery housing.

## Revendications

1. Dispositif de retenue pour une batterie (13) d'un véhicule automobile, et qui est susceptible d'être placée sur une plaque support (12), **caractérisé par** :
une charnière (4) disposée sur la face inférieure de la plaque support (2) et susceptible d'être mise en contact d'accrochage ou de verrouillage avec cette plaque et de pivoter autour de son axe longitudinal (8) de charnière, et présentant un alésage fileté (9) central, et
une bride de retenue (5) présentant un alésage central (12), et qui est susceptible d'être fixée sur la charnière (4) au moyen d'une vis de fixation (6),
dans lequel dispositif la face inférieure de la bride de retenue (5) comporte une coulisse (13) de verrouillage destinée à s'engager dans des surfaces de verrouillage (15) ménagées dans la plaque support (2) et dans lequel la charnière (4) est susceptible d'être placée avec la bride de retenue (5) dans une position de retenue de batterie.

2. Dispositif de retenue selon la revendication 1, **caractérisé en ce que** la charnière (4) comporte sur chacune de ses faces frontales un tourillon de palier (7) pour un engagement de verrouillage dans une cavité (10) formée dans la plaque support (2) et correspondant chaque fois à un tourillon.

3. Dispositif de retenue selon les revendications 1 et 2, **caractérisé en ce que** la plaque support 2 comporte un passage traversant (11) vers l'alésage fileté (9) de la charnière (4) pour la traversée de la vis de fixation (6).

4. Dispositif de retenue selon les revendications 1 à 3, **caractérisé en ce que** la coulisse de verrouillage (13) de la bride de retenue (5) comporte sur une face longitudinale plusieurs ergots de verrouillage (14) dirigés vers la plaque support (2) et qui glissent dans la surface de verrouillage (15) correspondante prévue à cet effet sur la face supérieure de la plaque support (2).

5. Dispositif de retenue selon les revendications 1 à 4, **caractérisé en ce que** la bride de retenue (5) est susceptible d'être reliée, au moyen de la vis de fixation, (6) à la charnière (4) disposée de façon pivotante sur la plaque support (2) et est susceptible de pivoter par serrage de fixation de la vis de fixation (6) dans une position retenant la batterie (3).

6. Dispositif de retenue selon les revendications 1 à 5, **caractérisé en ce que**, sur la face longitudinale opposée à la coulisse de verrouillage (13), la bride de retenue (5) est réalisée sous la forme d'une nervure de retenue (16) qui, dans la position de retenue de la batterie, s'engage dans une cavité ou sur une saillie (17) du boîtier de batterie.
